# EUROPEAN PATENT APPLICATION

(11) **EP 3 401 843 A1**
(43) Date of publication of application: **14.11.2018**
(21) Application number: 18171370.2
(22) Date of filing: 09.05.2018
(51) Int. Cl.: G06K 9/40, G06K 9/46, G06T 5/00, G06K 9/62

(54) **A METHOD, AN APPARATUS AND A COMPUTER PROGRAM PRODUCT FOR MODIFYING MEDIA CONTENT**

(30) Priority: 11.05.2017 FI 20175427
(71) Applicant: Nokia Technologies Oy, 02610 Espoo (FI)
(72) Inventor: NI, Xingyang, 33720 Tampere (FI); CRICRI, Francesco, 33100 Tampere (FI); AKSU, Emre Baris, 33800 Tampere (FI)
(74) Representative: Nokia EPO representatives

(57) **Abstract**

The invention relates to a method comprising receiving by a first neural network media content and an indication of an object to be removed from said media content; wherein the first neural network comprises a plurality of convolution layers and a plurality of de-convolution layers, wherein at least one convolutional layer is coupled to a corresponding de-convolution layer by a forward recurrent connection, a backward recurrent connection, and a direct connection; and generating by the first neural network an output media content, where the object has been removed. The invention also relates to an apparatus and a computer program product for implementing the method.

## Description

### Technical Field

The present solution generally relates to computer vision and artificial intelligence. In particular, the present solution relates to a method and technical equipment for modifying media content.

### Background

Many practical applications rely on the availability of semantic information about the content of the media, such as images, videos, etc. Semantic information is represented by metadata which may express the type of scene, the occurrence of a specific action/activity, the presence of a specific object, etc. Such semantic information can be obtained by analyzing the media.

The analysis of media is a fundamental problem which has not yet been completely solved. This is especially true when considering the extraction of high-level semantics, such as object detection and recognition, scene classification (e.g., sport type classification) action/activity recognition, etc.

The development of various neural network techniques has enabled learning to recognize image content directly from the raw image data, whereas previous techniques consisted of learning to recognize image content by comparing the content against manually trained image features. Very recently, neural networks have been adapted to take advantage of visual spatial attention, i.e. the manner how humans conceive a new environment by focusing first to a limited spatial region of the scene for a short moment and then repeating this for a few more spatial regions in the scene in order to obtain an understanding of the semantics in the scene.

### Summary

Now there has been invented an improved method and technical equipment implementing the method. Various aspects of the invention include a method, an apparatus, and a computer readable medium comprising a computer program stored therein, which are characterized by what is stated in the independent claims. Various embodiments of the invention are disclosed in the dependent claims.

According to a first aspect, there is provided a method comprising receiving by a first neural network media content and an indication of an object to be removed from said media content; wherein the first neural network comprises a plurality of convolution layers and a plurality of de-convolution layers, wherein at least one convolutional layer is coupled to a corresponding de-convolution layer by a forward recurrent connection, a backward recurrent connection, and a direct connection; and generating by the first neural network an output media content, where the object has been removed.

According to a second aspect, there is provided an apparatus comprising at least one processor, memory including computer program code, the memory and the computer program code configured to, with the at least one processor, cause the apparatus to perform at least the following: receive by a first neural network media content and an indication of an object to be removed from said media content; wherein the first neural network comprises a plurality of convolution layers and a plurality of de-convolution layers, wherein at least one convolutional layer is coupled to a corresponding de-convolution layer by a forward recurrent connection, a backward recurrent connection, and a direct connection; and generate by the first neural network an output media content, where the object has been removed.

According to a third aspect, there is provided a computer program product embodied on a non-transitory computer readable medium, comprising computer program code configured to, when executed on at least one processor, cause an apparatus or a system to: receive by a first neural network media content and an indication of an object to be removed from said media content; wherein the first neural network comprises a plurality of convolution layers and a plurality of de-convolution layers, wherein at least one convolutional layer is coupled to a corresponding de-convolution layer by a forward recurrent connection, a backward recurrent connection, and a direct connection; and generate by the first neural network an output media content, where the object has been removed.

According to an embodiment, the media content comprises a plurality of video frames.

According to an embodiment, the indication of the object is received every Nth frame, where N is a positive integer.

According to an embodiment, the indication of the object is based on a user input.

According to an embodiment, the indication of the object is based on an object tracking performed on the media content.

According to an embodiment, the indication of the object comprises a mask indicating at least one region of the media content corresponding to the object.

According to an embodiment, the object is determined and the mask is updated by a second neural network.

According to an embodiment, one or both of the first and second neural networks is trained by a plurality of input video frames comprising an overlaid image, and the mask is generated based on a position of the overlaid image.

According to an embodiment, the first neural network is trained to recognize one or more scene-cuts and the indication of the object is provided after each scene-cut.

According to an embodiment, the training of the first neural network comprises discontinuously changing a position of the overlaid image.

### Description of the Drawings

In the following, various embodiments of the invention will be described in more detail with reference to the appended drawings, in which
- Fig. 1: shows a computer system suitable to be used in a computer vision process according to an embodiment;
- Fig. 2a: shows an example of a Convolutional Neural Network that may be used in computer vision systems;
- Fig. 2b: shows a high-level example of a Convolutional Neural Network;
- Fig. 3: shows an encoder-decoder system implemented as a convolutional and a de-convolutional network;
- Fig. 4: shows an encoder-decoder system with lateral connections;
- Fig. 5: shows an encoder-decoder system with recurrent network;
- Fig. 6: shows yet another example of an encoder-decoder system;
- Fig. 7: shows a neural network according to an embodiment;
- Fig. 8: shows an example of integration of data synthesis into a training pipeline;
- Fig. 9: shows an example of a training pipeline;
- Fig. 10: shows another embodiment of a neural network according to an embodiment;
- Fig. 11: shows an embodiment of a neural network which learns to update a binary mask; and
- Fig. 12: is a flowchart of a method according to an embodiment.

### Description of Example Embodiments

In the following, several embodiments of the invention will be described in the context of computer vision and artificial intelligence. In the present embodiment video content is modified by removing unwanted object(s) from video frame(s). It is to be noted, however, that the invention is not limited to video content only. In fact, the different embodiments have applications in any media environment, where content modification is required.

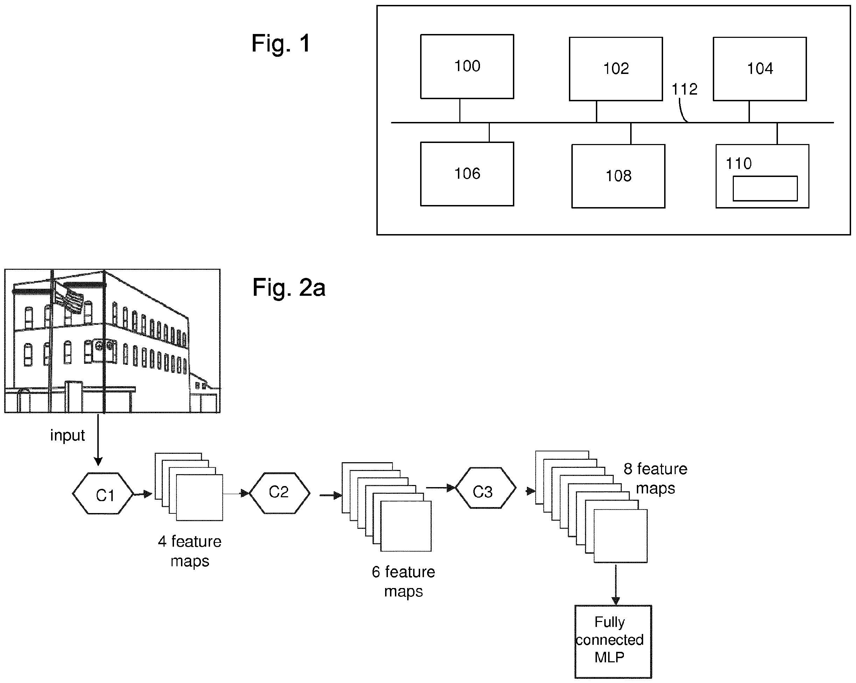

Figure 1 shows a computer system suitable to be used in image processing, for example in computer vision process according to an embodiment. The generalized structure of the computer system will be explained in accordance with the functional blocks of the system. Several functionalities can be carried out with a single physical device, e.g. all calculation procedures can be performed in a single processor if desired. A data processing system of an apparatus according to an example of Fig. 1 comprises a main processing unit 100, a memory 102, a storage device 104, an input device 106, an output device 108, and a graphics subsystem 110, which are all connected to each other via a data bus 112.

The main processing unit 100 is a processing unit comprising processor circuitry and arranged to process data within the data processing system. The memory 102, the storage device 104, the input device 106, and the output device 108 may include conventional components as recognized by those skilled in the art. The memory 102 and storage device 104 store data within the data processing system 100. Computer program code resides in the memory 102 for implementing, for example, computer vision process. The input device 106 inputs data into the system while the output device 108 receives data from the data processing system and forwards the data, for example to a display, a data transmitter, or other output device. The data bus 112 is a conventional data bus and while shown as a single line it may be any combination of the following: a processor bus, a PCI bus, a graphical bus, an ISA bus. Accordingly, a skilled person readily recognizes that the apparatus may be any data processing device, such as a computer device, a personal computer, a server computer, a mobile phone, a smart phone or an Internet access device, for example Internet tablet computer.

It needs to be understood that different embodiments allow different parts to be carried out in different elements. For example, various processes of the computer vision system may be carried out in one or more processing devices; for example, entirely in one computer device, or in one server device or across multiple user devices. The elements of computer vision process may be implemented as a software component residing on one device or distributed across several devices, as mentioned above, for example so that the devices form a so-called cloud.

One approach for the analysis of data in general and of visual data in particular is deep learning. Deep learning is a sub-field of machine learning. Deep learning may involve learning of multiple layers of nonlinear processing units, either in supervised or in unsupervised manner. These layers form a hierarchy of layers, which may be referred to as artificial neural network. Each learned layer extracts feature representations from the input data, where features from lower layers represent low-level semantics (i.e. more abstract concepts). Unsupervised learning applications may include pattern analysis (e.g. clustering, feature extraction) whereas supervised learning applications may include classification of image objects.

Deep learning techniques allow for recognizing and detecting objects in images or videos with great accuracy, outperforming previous methods. One difference of deep learning image recognition technique compared to previous methods is learning to recognize image objects directly from the raw data, whereas previous techniques are based on recognizing the image objects from hand-engineered features (e.g. SIFT features). During the training stage, deep learning techniques build hierarchical layers which extract features of increasingly abstract level.

Thus, an extractor or a feature extractor may be used in deep learning techniques. An example of a feature extractor in deep learning techniques is the Convolutional Neural Network (CNN), shown in Fig. 2a. A CNN may be composed of one or more convolutional layers with fully connected layers on top. CNNs are easier to train than other deep neural networks and have fewer parameters to be estimated. Therefore, CNNs have turned out to be a highly attractive architecture to use, especially in image and speech applications.

In Fig. 2a, the input to a CNN is an image, but any other media content object, such as video or audio file, could be used as well. Each layer of a CNN represents a certain abstraction (or semantic) level, and the CNN extracts multiple feature maps. The CNN in Fig. 2a has only three feature (or abstraction, or semantic) layers C1, C2, C3 for the sake of simplicity, but top-performing CNNs may have over 1000 feature layers.

The first convolution layer C1 of the CNN consists of extracting 4 feature-maps from the first layer (i.e. from the input image). These maps may represent low-level features found in the input image, such as edges and corners. The second convolution layer C2 of the CNN, consisting of extracting 6 feature-maps from the previous layer, increases the semantic level of extracted features. Similarly, the third convolution layer C3 may represent more abstract concepts found in images, such as combinations of edges and corners, shapes, etc. The last layer of the CNN (fully connected MLP) does not extract feature-maps. Instead, it may use the feature-maps from the last feature layer in order to predict (recognize) the object class. For example, it may predict that the object in the image is a house.

It is appreciated that the goal of the neural network is to transform input data into a more useful output. One of the example is classification, where input data is classified into one of N possible classes (e.g., classifying if an image contains a cat or a dog). Another example is regression, where input data is transformed into a Real number (e.g. determining the music beat of a song). Yet, another example is generating an image from a noise distribution.

The power of neural networks comes from the internal representation which is built inside the layers. This representation is distributed among many units and is hierarchical, where complex concepts build on top of simpler concepts.

A neural network has two main modes of operation: learning (a.k.a. training) phase and testing phase. The learning phase is the development phase, where the network learns to perform the final task. Learning may involve iteratively updating the weights or connections between units. The testing phase is the phase in which the network actually performs the task. Learning can be performed in several ways, for example, as a supervised learning, au unsupervised learning, or a reinforcement learning. In supervised learning, the network is provided with input-output pairs, where the output is usually a label. In supervised learning, the network is provided only with input data (and also with output raw data in case of self-supervised training). In reinforcement training, the supervision is more sparse and less precise; instead of input-output pairs, the network gets input data and, sometimes, delayed rewards in the form of scores (e.g., -1, 0, or +1).

In general, neural networks can be categorized into two types: discriminative and generative. Classifiers and regressors are discriminative networks. Networks generating new data (such as images) are generative networks. Discriminative networks may be trained by supervised methods, whereas generative networks may be trained by unsupervised or self-supervised methods. Reinforcement learning methods may be used when the objective function is not differentiable.

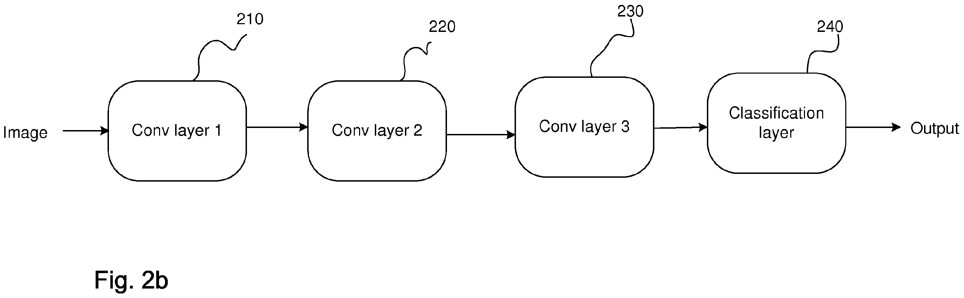

Figure 2b illustrates another high-level example of a Convolutional Neural Network. The Convolutional Neural Network receives an image as an input, and the convolutional layers 210, 220, 230 perform convolution operations on the image with weights shared spatially. Lower layers 210, 220 extract semantically low-level features, such as edges and textures, from the image. Higher-level layers 230 extract semantically high-level features, such as shapes, objects, scene (e.g., chair, person, room), from the image. The classification layer 240 classifies the input image into one or more class according the extracted content, which class(es) is/are output from the Convolutional Neural Network.

A neural encoder-decoder model is a neural network made of two parts, i.e. an encoder and a decoder. Encoder is a neural network which takes in an input image and extracts feature maps at multiple layers, and outputs the feature maps from the last convolutional layer. Decoder is a neural network which takes in feature maps from the last convolutional layer of the encoder and reconstructs the image with multiple layers of computation. This kind of model is able to encode data into a lower-dimensional vector (the feature maps) and reconstructs the data from that vectors. The neural encoder-decoder model can be utilized in applications, such as denoising an input image, inpainting missing data, pre-training an encoder for feature extraction, etc.

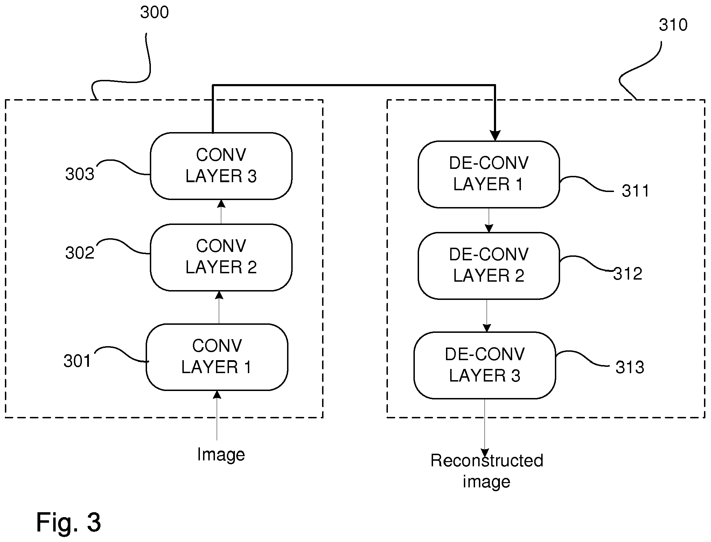

The structure of the encoder and the decoder of the neural encoder-decoder model can be any type but, for visual analysis, one of the most common structures is a convolutional network (CNN) for the encoder and de-convolutional network (de-CNN) for the decoder. The de-CNN is a network with layers performing transposed convolution. Figure 3 illustrates an example of encoder-decoder model. The neural network of Figure 3 comprises an encoder 300 and a decoder 310. The encoder 300 is implemented as a convolutional network (301, 302, 303) and the decoder 310 is implemented as a de-convolutional network (311, 312, 313). As is realized from Figure 3, the decoder 310 receives feature maps from the last layer 303 of the encoder 300, and reconstructs the image with the de-convolutional layers (311, 312, 313).

In this kind of system, the decoder 310 needs to reconstruct data only from small, low-dimensional vector (the output of the encoder's last layer). Furthermore, this vector encodes only semantically high-level information, such as shapes, objects, etc. The intermediate and lower layer's information is not directly used for reconstruction. This is a waste of information which would anyway be available.

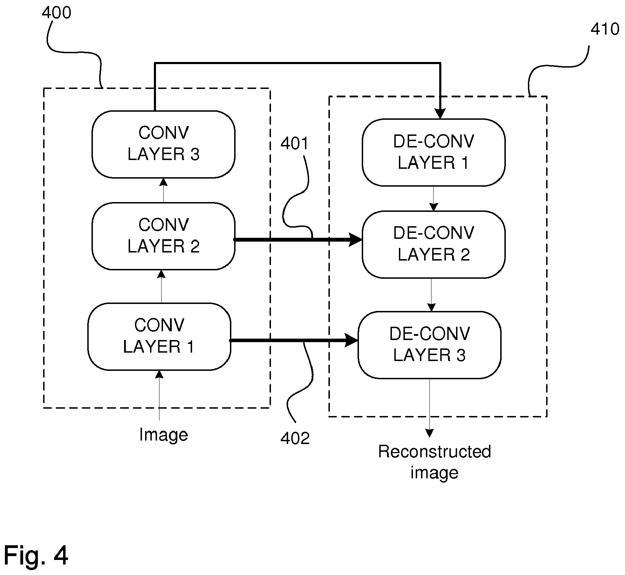

In a Ladder network, shown in Figure 4, lateral connections 401, 402 are added between an encoder 400 and a decoder 410 in order to help the decoder 410 to get more information from intermediate layers (Conv layer 1, Conv layer 2). These lateral connections 401, 402 may drastically improve denoising performance.

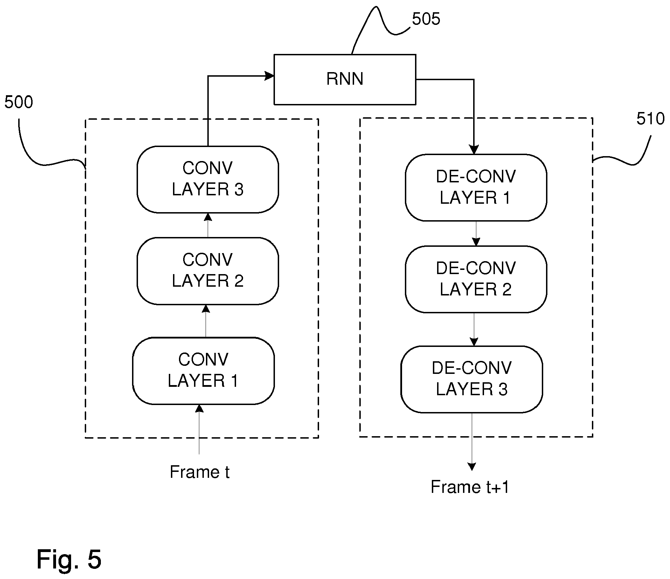

The encoder-decoder structure can be extended from static images to video by adding modules which model the temporal aspect of videos (e.g., movements of objects). Analysis of video or other types of data with temporal evolution (e.g., video, speech, audio, text), may be based on Recurrent Neural Networks (RNN), where a hidden representation (hidden state *h*) is updated based not only on the current input but also on the hidden representations obtained from past inputs. In other words, RNNs work by recursively looking at the input at each time-step *t* and building an internal representation of the whole sequence seen so far. This internal representation is a "summary" and can be thought of as a "memory". Currently, the most advanced and effective type of RNN are the Long Short-Time Memory (LSTM) and Convolutional Long Short-Time Memory (Conv-LSTM). RNNs may be used for many applications, such as for accumulating a summary of video frames for performing video classification, activity classification, etc. In some cases, RNNs may be used for predicting future video frames. However, RNNs may also be used alone, or in combination with CNN as shown in Figure 5. Figure 5 illustrates a neural encoder-decoder network 500, 510 with additional RNN 505, for example LSTM, for modeling the temporal aspect in media content. As shown in Figure 5, a video prediction is performed by giving N frames starting from frame 1 to frame *t* (i.e., frames *[1, ...,t]*) to the encoder-decoder network 500, 510, and getting the next frame *t*+*1* as an output.

In Video Ladder Networks, recurrent connections have been applied at each block level between the encoder part 500 and the decoder part 500. As a result, the neural network can model the temporal information from not only high level features but also low level features.

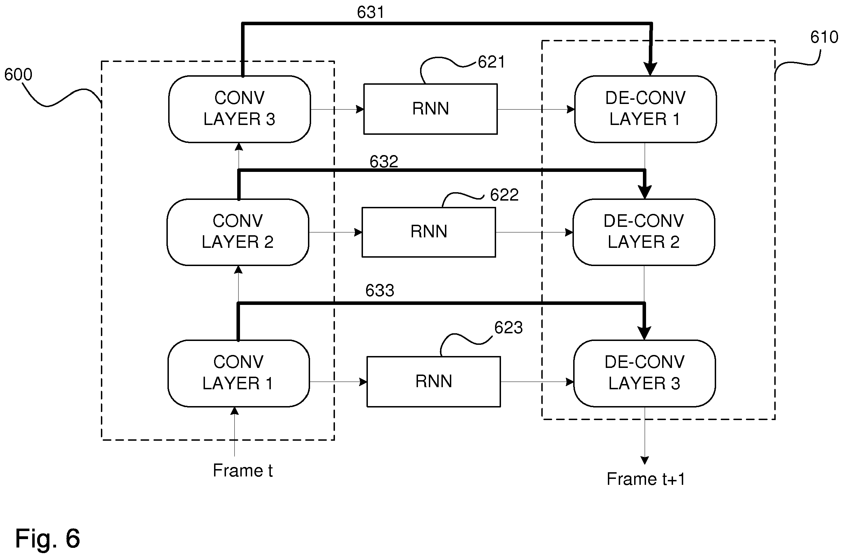

Feedforward connections may be also utilized to make the prediction task easier. Satisfactory results on Video Prediction may be achieved by using a neural network as shown in Figure 6. In this embodiment, the decoder 610 is allowed to use direct information about all encoder's 600 convolution layers 1, 2, 3 for the latest past frame, which is the one which should influence the future prediction the most, especially at intermediate and lower levels. This is implemented by adding direct lateral connections 631, 632, 633 to the system in addition to the recurrent lateral connections 621, 622, 623. A direct connection may refer to a connection that delivers the feature maps of the last timestamp from the encoder part to the decoder part.

According to an embodiment, only some of the convolutional layers of Fig. 6 are laterally coupled to the corresponding de-convolution layers with both the recurrent and direct connections. Some convolutional layers may not be connected at all and some layers may be connected by a direct or recurrent (e.g. LSTM) connection only. For example, in one example embodiment, convolutional layer 3 may be laterally connected through a recurrent connection 621 without the direct connection 631. Convolutional layer 2 may be laterally connected through a direct connection 632 and a recurrent connection 622. Convolutional layer 1 may be laterally connected through a direct connection 633 and without a recurrent connection 633. It is therefore possible to balance between the performance and the complexity of the video prediction system. It is also possible to optimize the encoder-decoder model for certain levels of features, which correspond to the laterally coupled convolution layers. It is also possible to apply the recurrent connection(s) to capture the temporal variations only at the layer(s) where temporal variations are expected.

In a conventional recurrent neural network, the network can obtain information of the past timestamps. However, it cannot access the future timestamps. In other words, the network cannot make a use of the information which is only available in the future. For example, if there are 10 frames in total and the network needs to generate a prediction for the frame 5. The conventional recurrent neural network could learn from frame 1 to frame 5, but not from frame 6 to frame 10. To make full use of available information, bidirectional recurrent neural network can be used. The bidirectional recurrent neural network may consist of one forward RNN and one backward RNN. The data flows oppositely in these two RNNs and the output from both RNNs can be merged to generate the prediction for current timestamp.

The present embodiments are targeted to a solution for removing unwanted objects from videos by using a neural network. Given an image with certain areas blanked out, one can infer these missing parts solely based on the background scenes. Given a video with certain areas blanked out, one can treat the consecutive video frames separately and perform the inpainting task frame by frame without utilizing bi-directional temporal information. However, it is possible that the content in the missing parts of current frame is actually visible in the preceding frames or the following frames. As a result, it is a better idea to predict the missing parts using not only the background scenes but also the neighboring frames.

In the present embodiments, objects are removed from video content by using a trained artificial neural network which is able to reconstruct the input frame while removing unwanted object(s) from the frame. The unwanted object(s) may be specified by the user. As a prerequisite, the network takes in decoded video frames which contain one or more unwanted objects. Meanwhile, the user may provide the coordinates of the objects that he/she wants to remove. In the end, the network produces a video with the unwanted objects removed. The general goal is to make the output video as realistic as possible, while removing the objects completely.

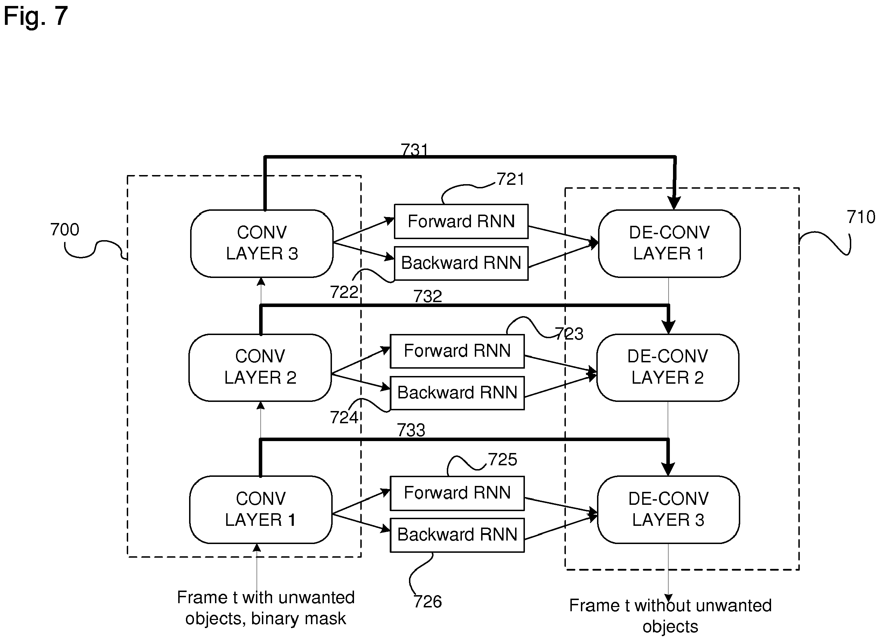

The present embodiments utilize Deep Learning (DL) techniques such as Convolutional Neural Networks (CNNs) and Recurrent Neural Networks (RNNs). As shown in Figure 7, the network consists of an encoder part 700, a decoder part 710, one or more recurrent connections 721, 722, 723, 724, 725, 726 and one or more feedforward connections 731, 732, 733 between corresponding layers of the encoder 700 and decoder 710.

In order to remove the unwanted object(s) from the video frames, the network may perform inpainting on the frames which contains the unwanted object(s). In addition, the network expects the user or an automated procedure to indicate the unwanted object in a frame. This can be implemented e.g. by enabling a user to provide boundaries (e.g., in the form of a bounding box) on the frame, which outline the area containing the unwanted object(s). The boundaries are used for deriving a binary mask which can be concatenated to the input frame.

The boundaries may be handled in different ways. According to an embodiment, the user may specify such boundaries every N (where N is a positive integer) frames (e.g., 30 frames) and then the system uses the same boundaries for successive N frames. This is based on the fact that the objects in successive frames do not necessarily move too much when the value of N is small. In the extreme case when the value of N is infinite, the user may only provide the boundaries for the first frame in the video or the first frame which contains the unwanted objects. Then, the network is configured to perform implicit tracking of the objects.

According to another embodiment, the system may explicitly use separate trackers to detect the unwanted objects in such frames which does not have the boundaries provided by the user. As the system performs the tracking explicitly, the user may be relieved from the pressure of manually providing the bounding boxes for many frames.

The input to the encoder 700 at each timestamp comprises the decoded video frame and the binary mask which corresponds to the coordinates of the unwanted objects at current frame. The decoded video frame may consist of three channels, namely red, green and blue. The binary mask may consist of one channel. One can perform concatenation along the channel axis, wherein the resulting input would have four channels in total. On the contrary, the output at each timestamp still has three channels since the video frame is desired to be reconstructed without the unwanted objects.

As shown in Figure 7, bidirectional recurrent neural network 721, 722, 723, 724, 725, 726 is applied to the network. Although the normal Convolutional Long Short-Term Memory (Conv-LSTM) can be applicable in the object removal task, such network cannot make use of the future frames when predicting current frame. If the unwanted objects are moving, the missing part which is covered by the unwanted objects in the preceding frames can be inferred from the following frames, and vice versa.

Accordingly, bidirectional recurrent neural network is used in the present embodiments. Each recurrent connection has at least one forward RNN 721, 723, 725 and one backward RNN 722, 724, 726 between the layers of the encoder part 700 and the decoder part 710. The recurrent connection can learn from not only the past frames but also one or more future frames. Finally, the decoder part 710 is used to generate the prediction for the input of each timestamp. In the Video Ladder Networks work, the network may predict the next frame, and the recurrent connections work in the "many to one" mechanism. In the object removal task, every input frame is needed to be reconstructed and the decoder part needs to be applied to each timestamp. As a result, "many to many" mechanism in the recurrent connections may be used so that the output at each timestamp will be generated from the recurrent neural networks.

Training datasets play an important part in a Deep Learning solution. Given a natural video dataset and natural image dataset such as YouTube-8M and ImageNet, one can randomly choose a video clip and an image at each time. By analyzing the chosen image, one can crop out one or more objects. Afterwards, the video is overlaid with the objects cropped from the image. The added objects in the overlay can move randomly inside the video frames or remain at the same position. Since the objects are added manually, the exact coordinates of the objects at each timestamp are known and the binary mask can be generated without human intervention.

In the above description images and videos have been used as an example of media content. According to an embodiment, the neural networks described in Figures 2 to 7 may be also adapted to operate with other media content types, for example audio. Audio processing may be used for example to remove one or more undesired audio components such as noise or audio data originating from objects outside the video field of view. When adapting the embodiments for this purpose the neural networks may comprise one-dimensional convolution and de-convolution layers. In other embodiments, for example when removing objects from a video, the convolution and de-convolution layers may be two-dimensional.

As an alternative embodiment, the cropped object may be obtained by running an object tracker on a video, and the tracked object may then be overlaid on the target video used for training the object-removal model. In such case, the cropped object may be positioned at a random position (but correlated to previous frames). Alternatively, the cropped object may also be positioned at the position it had in the original frame, so that the motion is somehow meaningful for that particular object.

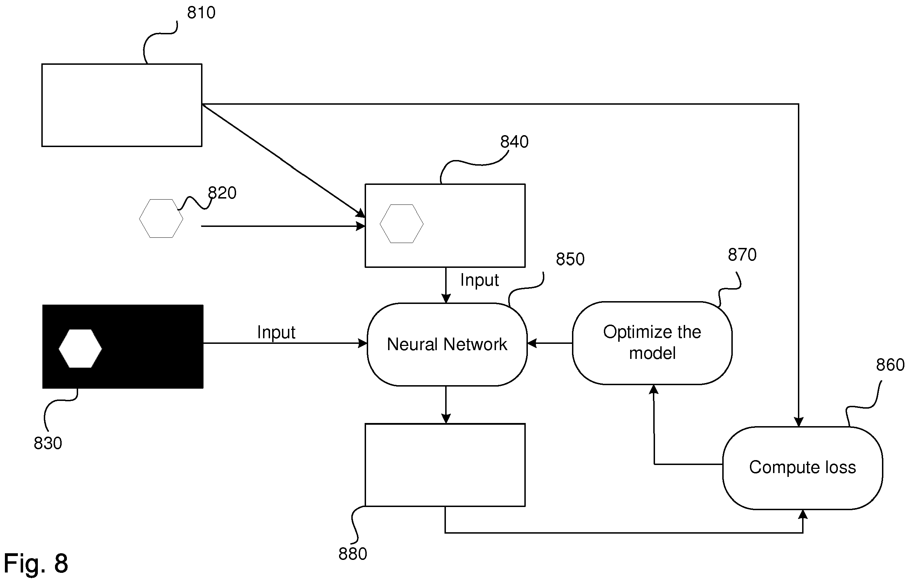

Figure 8 illustrates how a data synthesis may be integrated into a training pipeline. The processed video frames 840 (i.e. generated from an object 820 being overlaid on an original video frame 810) and the binary masks 830 are the inputs of the neural network 850 while the original video frames 810 are the ground truth frames. By comparing the differences between the reconstructed frames (frames where object has been removed) 880 and the original frames 810, the network may be optimized 870 accordingly. The loss function 860 can be Mean Squared Error or an adversarial loss. In the adversarial loss case, a Generative Adversarial Networks (GANs) training method can be applied. In such solution, there would be an adversary classifier which classifies how realistic the reconstructed video frames are.

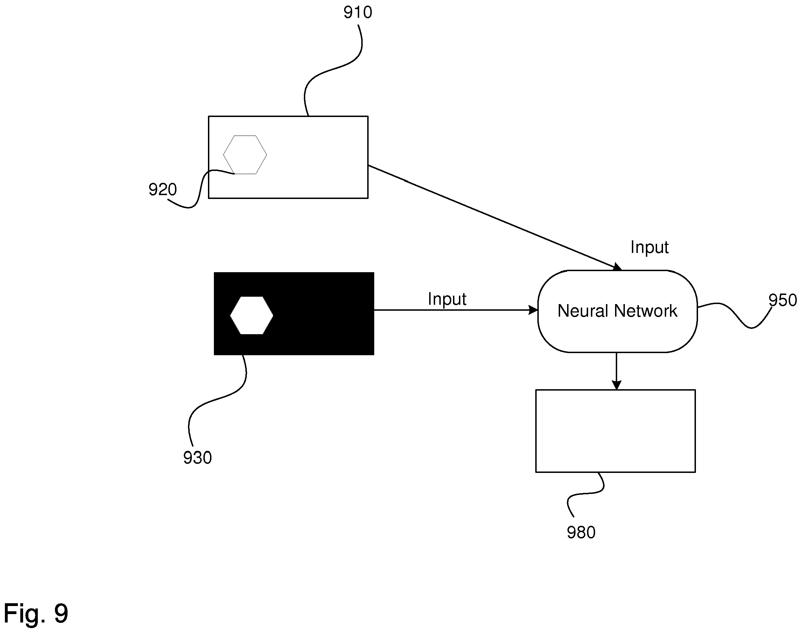

Figure 9 illustrates an example of testing pipeline. The testing pipeline may be applied for an object removal task after the training phase. The user can indicate the objects 920 to be removed. This may be done only in one frame or per frame 910, depending on how training was performed. The system creates a binary mask 930 from this indication. Both the binary mask 930 and the video frames 910 are provided to the neural network 950, which outputs a video 980 with the user-selected object removed.

As an additional embodiment, a pre-processing step can be applied to perform scene-cut detection. In the training process, the scene-cut is simulated by either not having any object in the mask, or by moving the object to a completely different location. In the testing process, the system would run a scene-cut detection, and at each scene-cut the system may ask the user to re-initialize the bounding box. Alternatively, the system may try to detect such event automatically.

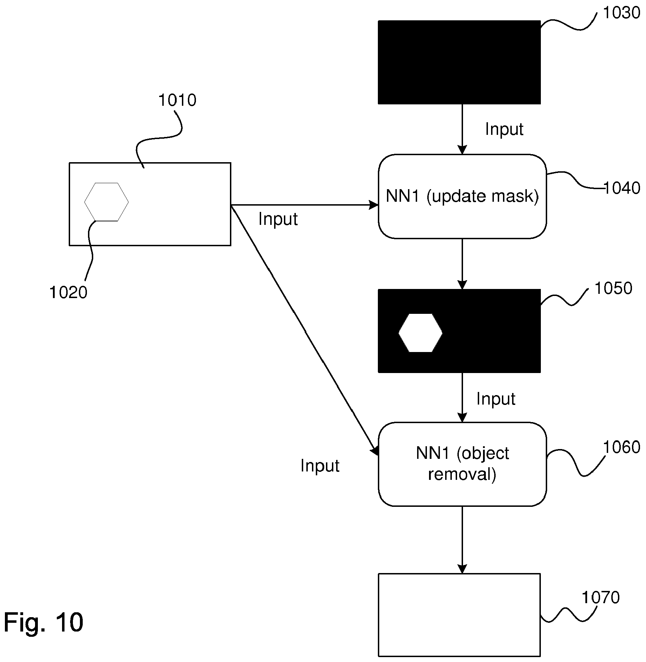

As another additional embodiment, another neural network may be applied to generate or update the binary mask first. Figure 10 shows a pipeline of the algorithm which contains two separate neural networks 1040, 1060. The first neural network 1040 is used to update the binary mask 1030 being input to the first neural network 1040. The updated mask 1050 corresponds to the coordinates of the unwanted objects 1020 in the current frame 1010. The second neural network 1060 is used to remove the unwanted objects to produce an output frame 1070 having an object removed.

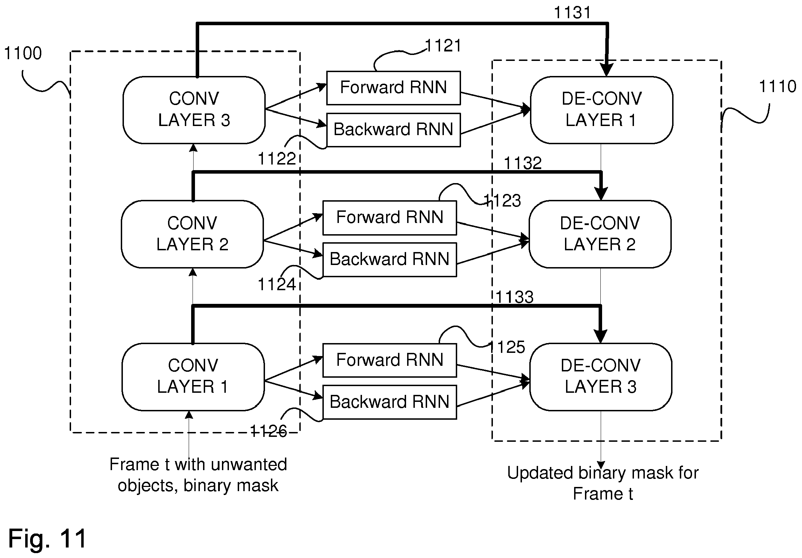

Figure 11 demonstrates the structure of the first neural network (Fig. 10: 1040) in detail. The structure and elements of the neural network presented in Figure 11 correspond to the neural network presented in Figure 7, except that the neural network of Figure 11 aims at predicting a mask while the neural network of Figure 7 aims at predicting a frame. At each timestamp, the encoder part 1100 of the network takes in the current frame and binary mask. The inputted mask can be a dummy array which only contains zeros, unless the user has provided corresponding mask for current frame. Afterwards, the decoder part 1110 reconstructs a mask for the current frame based on the input tensors from the encoder part 1100. The output layer may comprise a softmax layer with two classes representing mask and no-mask. Alternatively, the output layer may be a sigmoid layer which outputs one matrix of values between 0 and 1. This matrix may then be thresholded at the value 0.5 to obtain a matrix with only two possible values, representing mask and no-mask. By contrast, the first neural network learns to update the binary mask, and the learned information is stored in the memory of the recurrent connections so that the network knows how to identify the unwanted objects in the new frame. As a result, the first neural network will decrease the difficulty of the object removal task and the whole algorithm can be optimized from end-to-end.

In previous, a method for removing unwanted objects has been disclosed. In the method a first neural network receives a plurality of input video frames and an indication of an object to be removed, and generates a plurality of output video frames, where the object has been removed. The first neural network comprises a plurality of convolutional layers and a plurality of de-convolution layers, wherein at least one convolutional layer is coupled to a corresponding de-convolution layer by a forward recurrent connections, a backward recurrent connection, and a direct connection.

In various embodiments, the method comprises one or more of the following features:
- an indication of the object is received every Nth frame;
- an indication of the object is based on user input;
- an object tracking is used to provide the indication of the object;
- the indication of the object comprises a mask indicating at least one region of the video frames corresponding to the object;
- a second neural network is used to determine the object and to update the mask;
- the first and/or second neural network are trained by a plurality of input video frames comprising an overlaid image and the mask is generated based on a position of the overlaid image;
- the first neural network is trained to recognize one or more scene-cuts and wherein the indication of the object is provided after each scene-cut;
- the training the first neural network comprises discontinuously changing a position of the overlaid image.

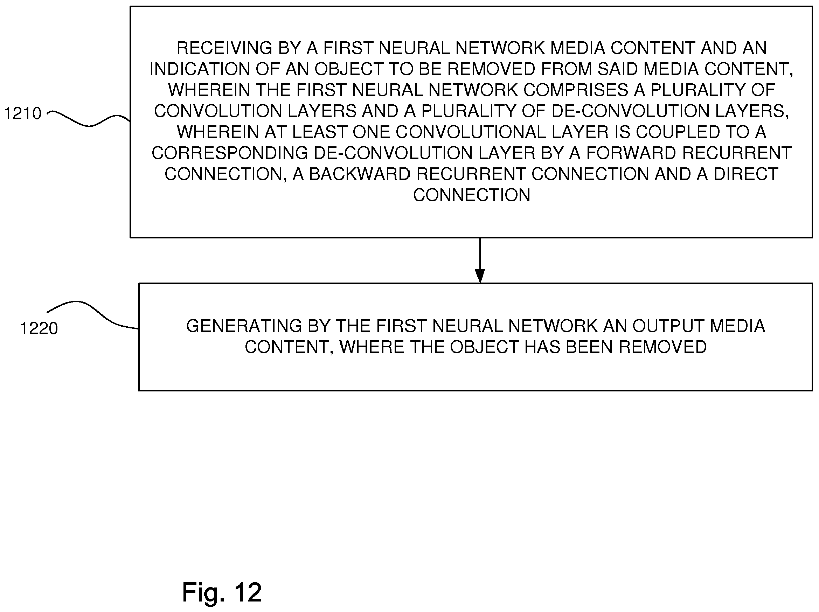

Figure 12 is a flowchart illustrating a method according to an embodiment. A method comprises for example receiving by a first neural network media content and an indication of an object to be removed from said media content; wherein the first neural network comprises a plurality of convolution layers and a plurality of de-convolution layers 1210, wherein at least one convolutional layer is coupled to a corresponding de-convolution layer by a forward recurrent connection, a backward recurrent connection, and a direct connection; and generating by the first neural network an output media content, where the object has been removed 1220.

An apparatus according to an embodiment comprises means for receiving by a first neural network media content and an indication of an object to be removed from said media content; wherein the first neural network comprises a plurality of convolution layers and a plurality of de-convolution layers, wherein at least one convolutional layer is coupled to a corresponding de-convolution layer by a forward recurrent connection, a backward recurrent connection, and a direct connection; and means for generating by the first neural network an output media content, where the object has been removed. The means comprises a processor, a memory, and a computer program code residing in the memory. The computer program may be configured to cause the apparatus to perform methods as described throughout the specification and in any of claims.

The various embodiments may provide advantages. The present embodiments require minimal user interactions for the object removal task on videos. The videos can contain unwanted objects, such as unfamiliar people on the street, unnecessary date stamps or watermarks. Furthermore, in the context of 360 degrees cameras, it may be very beneficial to remove objects which are needed at capture time by the capture process itself, such as microphones, illumination devices, stands people belonging to the production staff, etc. While known methods use classical Computer Vision algorithms, the present embodiments are targeted to Deep Learning which achieves significant improvements. The method is efficient to created massive amount of training samples. The propose algorithm may be built on top of a promising Video Prediction algorithm. The trained model can be robust to different backgrounds and different objects.

The various embodiments of the invention can be implemented with the help of computer program code that resides in a memory and causes the relevant apparatuses to carry out the invention. For example, a device may comprise circuitry and electronics for handling, receiving and transmitting data, computer program code in a memory, and a processor that, when running the computer program code, causes the device to carry out the features of an embodiment. Yet further, a network device like a server may comprise circuitry and electronics for handling, receiving and transmitting data, computer program code in a memory, and a processor that, when running the computer program code, causes the network device to carry out the features of an embodiment.

If desired, the different functions discussed herein may be performed in a different order and/or concurrently with other. Furthermore, if desired, one or more of the above-described functions and embodiments may be optional or may be combined.

Although various aspects of the embodiments are set out in the independent claims, other aspects comprise other combinations of features from the described embodiments and/or the dependent claims with the features of the independent claims, and not solely the combinations explicitly set out in the claims.

It is also noted herein that while the above describes example embodiments, these descriptions should not be viewed in a limiting sense. Rather, there are several variations and modifications, which may be made without departing from the scope of the present disclosure as, defined in the appended claims.

## Claims

1. A method, comprising:
- receiving by a first neural network media content and an indication of an object to be removed from said media content;
- wherein the first neural network comprises a plurality of convolution layers and a plurality of de-convolution layers, wherein at least two convolutional layers are coupled to corresponding de-convolution layers by forward recurrent connections, backward recurrent connections, and direct connections; and
- generating by the first neural network an output media content, where the object has been removed.

2. The method according to claim 1, wherein the media content comprises a plurality of video frames.

3. The method according to claim 2, wherein the indication of the object is received every Nth video frame, where N is a positive integer.

4. The method according to claim 1 or 2 or 3, wherein the indication of the object is based on a user input.

5. The method according to any of the claims 1 to 4, wherein the indication of the object is based on an object tracking performed on the media content.

6. The method according to any of the claims 1 to 5, wherein the indication of the object comprises a mask indicating at least one region of the media content corresponding to the object.

7. The method according to claim 6, further comprising determining the object and updating the mask by a second neural network.

8. The method according to claim 7, further comprising training one or both of the first and second neural networks by a plurality of input video frames comprising an overlaid image, and generating the mask based on a position of the overlaid image.

9. The method according to any of the claims 2 to 8, further comprising training the first neural network to recognize one or more scene-cuts and providing the indication of the object after each scene-cut.

10. The method according to claim 8 or 9, wherein training the first neural network comprises discontinuously changing a position of the overlaid image.

11. An apparatus configured to:
- receive by a first neural network media content and an indication of an object to be removed from said media content;
- wherein the first neural network comprises a plurality of convolution layers and a plurality of de-convolution layers, wherein at least two convolutional layers are coupled to corresponding de-convolution layers by forward recurrent connections, backward recurrent connections, and direct connections; and
- generate by the first neural network an output media content, where the object has been removed.

12. The apparatus according to claim 11, further configured to implement any of the methods of claims 2 to 10.

13. A computer program product comprising computer program code configured to, when executed on at least one processor, cause an apparatus or a system to:
- receive by a first neural network media content and an indication of an object to be removed from said media content;
- wherein the first neural network comprises a plurality of convolution layers and a plurality of de-convolution layers, wherein at least two convolutional layers are coupled to corresponding de-convolution layers by forward recurrent connections, backward recurrent connections, and a direct connections; and
- generate by the first neural network an output media content, where the object has been removed.

14. The computer program product according to claim 13, further comprising computer program code configured to cause an apparatus or a system to implement any of the methods of claims 2 to 10.
